# EUROPEAN PATENT SPECIFICATION

(11) **EP 3 376 923 B1**
(45) Date of publication and mention of the grant of the patent: **23.10.2019**
(21) Application number: 16795363.7
(22) Date of filing: 15.11.2016
(51) Int. Cl.: A47J 43/042, A47J 31/44, A47J 43/07

(54) **METHOD OF PREPARING A BEVERAGE**
VERFAHREN ZUM ZUBEREITEN VON GETRÄNKEN
MÉTHODE DE PRÉPARATION DE BOISSONS

(30) Priority: 16.11.2015 EP 15194722
(43) Date of publication of application: 26.09.2018
(73) Proprietor: Société des Produits Nestlé S.A., 1800 Vevey (CH)
(72) Inventor: DUBIEF, Flavien, 1424 Champagne (CH); YOAKIM, Alfred, 1806 St-Legier-la-Chiesaz (CH)
(74) Representative: Ducreux, Marie
(86) International application number: PCT/EP2016/077762
(87) International publication number: WO 2017/085073

(56) References cited:
- EP-A1- 2 822 226
- WO-A1-2015/135031
- US-A1- 2014 269 154
- US-A1- 2015 305 564

## Description

### Field of the invention

The present invention relates to a method of preparing a beverage with a heating and mixing container.

### Background of the invention

It is known to rapidly prepare a beverage by dissolving a soluble beverage powder like instant coffee with hot water in a drinking cup. The soluble beverage is usually dosed from a jar or from a stick and water is heated in a kettle. This preparation is fully convenient and rapid, yet it rarely enables the optimal reconstitution of the beverage.

It has been proposed to improve such a preparation by providing heating and/or mixing containers. These containers usually consist in a drinking container comprising a stirring device at the bottom of the container and optionally a heater in the floor or sidewalls of the container. The stirring device improves the dissolution of the beverage powder whatever the temperature of the diluent introduced therewith, and eventually enables frothing of the beverage. The heater enables the use of cold diluent and the use of a kettle to heat water is not needed any longer.

Even with these improvements the preparation of a beverage with such devices is often not optimal because the devices of the state of the art cannot set the optimal process parameters, specifically the diluent temperature, according to the taste of the consumer and according to the nature of the beverage ingredient introduced in the container. Actually, as the consumer may introduce whatever kind of soluble ingredient in the drinking container, default parameters are set in order to enable the preparation of all kinds of beverages (black American coffee, espresso, 3-in-1 instant coffee mixes - that are mixtures of at least instant coffee powder, milk powder and powdered sugar -, milk, soup, ...). Default parameters may be preferably set for preparing black coffee (meaning for example a relatively high temperature of about 75°C), yet if a beverage with milk is prepared with these parameters, it may lead to burning of milk and a bad taste.

Document US-A-2014/269154 discloses a method of preparing a beverage wherein a control system of a beverage mixing device controls the mixing device based on information received by a mobile device.

An object of the invention is to address at least some of the drawbacks of the drinking devices of the prior art or at least to provide an alternative thereto.

### Summary of the invention

According to the present disclosure, there is provided a system for beverage preparation comprising:
- a mobile device, and
- a beverage heating, mixing and drinking device comprising :
   - a drinking container body, said body comprising a floor and a sidewall extending upwardly from the floor to form a space inside the sidewall and the floor wherein the beverage is mixed,
   - a mixing device positioned within the container body,
   - a motor cooperating with the mixing device through the floor of the container body,
   - a heating device configured for heating a liquid hold in the container body,
   - a temperature sensor configured for measuring the temperature of a liquid contained in the container body,
   - a control system operable to execute a beverage preparation process comprising control of the heating device and the mixing device, the control system comprising a communication interface to receive information from the mobile device,
wherein the control system receives through the communication interface information related to at least the nature of the beverage ingredient introduced in the drinking container body manually.

The beverage heating, mixing and drinking device is configured so that a consumer is able to drink the beverage prepared in the device directly from the device. The device is essentially a drinking container like a cup, a glass or a mug.

The beverage heating, mixing and drinking device comprises a mixing device positioned within the container body and a motor cooperating with the mixing device through the floor of the container body.

The mixing device can be a blade, a whipper, a stirrer. It is generally positioned on the floor of the container body. The mixing device is moved by a motor.

The motor is generally a rotating motor comprising a drive shaft cooperating directly or indirectly with the mixing device through the floor of the container body.

According to one mode, the mixing device can be mechanically attached to the shaft of the motor.

According to another mode, the motor can drive the mixing device through a magnetic drive effect through the floor of the container body.

The device comprises a heating device to heat the beverage in the mixing chamber.

The heating device can be positioned on the external sides of the container body, for example the heating device can be a heating resistive ring.
The heating device can be positioned at the bottom of the container body, for example the heating device can be a heating sticks or a serigraphic heating plate.

The beverage heating, mixing and drinking device comprises a temperature sensor configured for measuring the temperature of a liquid contained in the container body. The temperature sensor can be a positive or negative temperature coefficient resistance. It is preferably placed on the surface of the floor of the container body and estimates the temperature of the beverage in the container body on the other side. It is preferably a negative temperature coefficient resistance (NTC resistance).

The beverage heating, mixing and drinking device can comprise a power supply like a battery (for example 12 V battery), preferably used to supply power to the motor of the mixing device.
The beverage heating, mixing and drinking device usually comprise a connection to external power supply (230 V), preferably used to provide power to the heating device and for the charger of the battery.

According to one embodiment the heating, mixing and drinking device is an assembly of a drinking container and a docking station for receiving said drinking container, the rotating motor and the heating device being part of the drinking container and being attached to the bottom of the container body.
In this embodiment, preferably the drinking container comprises at least one battery and the docking station comprises a charger for said at least one battery.
Generally the battery is attached to the bottom of the container body.
In this embodiment, preferably a connection to power supply is attached to the docking station.

Preferably the beverage heating, mixing and drinking device comprises a lid for covering the top of the container body.

The beverage heating, mixing and drinking device usually comprises at least one button for initiating the beverage preparation, in particular for switching the mixing device on.

The beverage heating, mixing and drinking device comprises a control system operable to execute a beverage preparation process comprising control of the heating device and the mixing device. Usually the control system comprises a memory storing parameters of the beverage preparation process depending on the nature of the beverage to be prepared. During the preparation, the heating device is controlled based on the measures of the temperature provided by the temperature sensor.

The beverage heating, mixing and drinking device forms a system with a mobile device. The mobile device can be a personal communication device like a mobile phone, a smart phone, a portable computer, a tablet, with the capacity to execute a software program such as an applet, widget. The mobile device enables wireless communication such as Bluetooth™.

The control system of the beverage heating, mixing and drinking device comprises a communication interface to receive information from the mobile device.
Preferably the communication interface of the control system comprises a wireless communication interface
The communication interface with the mobile device is for data transfer. The communication interface may comprise a wireless communication interface and is generally operable to transmit and receive wireless signals by a radio. It is preferably Bluetooth™ from the Bluetooth Special Interest Group of Kirkland Wash.

Through the communication interface the control system receives information related to at least the nature of the beverage ingredient introduced in the drinking container body, said beverage ingredient being introduced in the body manually.
The control system is operable to use the information related to at least the nature of the beverage ingredient and received from the mobile device to control the heating device and set the temperature of preparation of the beverage.
Accordingly, based on information about the nature of the beverage ingredient, the control system can derive information about the recommended temperature of preparation of the beverage from said ingredient. For example instant coffee is usually prepared at a temperature of about 75°C, whereas milk shall not be heated at more than 65°C.
Usually, information about the recommended temperature is stored in the memory of the control system.
Consequently, the right temperature is applied for the preparation of the beverage from the beverage ingredient manually introduced in the container body by the user. In particular, there is less risk that a too high temperature is applied for a beverage comprising milk and that a part of this product burns on the internal surface of the body.

According to one embodiment, the control system can receive information directly related to the nature of the beverage ingredient manually introduced in the drinking container body. The mobile device can comprise an interface enabling the user to select the nature of the ingredient like coffee, milk, chocolate.

According to another embodiment, the control system can receive information indirectly related to the nature of the beverage ingredient manually introduced in the drinking container body, in particular information related to a reference of the beverage ingredient introduced in the drinking container body manually.

The mobile device can comprise an interface enabling the user to set or scan a commercial reference of the ingredient introduced in the container body. For example, the mobile device is configured for entering the trademark name of the product or scanning a QRC from the packaging of the beverage ingredient in order to get information about the nature of said ingredient.

Optionally the information can also be related to the temperature of the final beverage that is desired and set by the consumer for the beverage he/she is going to prepare.

According to the present invention there is provided a method of preparing a beverage with a beverage heating, mixing and drinking device, said device comprising :
- a drinking container body, comprising a floor and a sidewall extending upwardly from the floor to form a space inside the sidewall and the floor wherein the beverage is mixed,
- a mixing device positioned within the container body,
- a motor cooperating with the mixing device through the floor of the container body,
- a heating device configured for heating a liquid hold in the container body,
- a temperature sensor configured for measuring the temperature of a liquid contained in the container body,
- a control system operable to execute a beverage preparation process comprising control of the heating device and the mixing device, the control system comprising a communication interface to receive beverage preparation process information from a mobile device,
said method comprising the steps of :
a)- manually introducing a beverage ingredient and optionally a diluent in the container body, either simultaneously or subsequently, then
b)- providing the control system with information related to at least the nature of the beverage ingredient manually introduced in the drinking container body in step a), by means of a mobile device, and
c)- actuating the heating device and the mixing device either separately or simultaneously to prepare the beverage, the control system controlling the heating device and the mixing device based on at least information related to the nature of the beverage ingredient and received from the mobile device in step b).

In one embodiment, the control system can receive information directly related to the nature of the beverage ingredient manually introduced in the drinking container body. The mobile device can comprise an interface enabling the user to select the nature of the ingredient like coffee, milk, chocolate.

In another embodiment, the control system can receive information indirectly related to the nature of the beverage ingredient manually introduced in the drinking container body, in particular information related to a reference of the beverage ingredient introduced in the drinking container body manually.

The control system can control the heating device based on at least information relative to the temperature of preparation of the beverage received from the mobile device and the temperature measured by the temperature sensor.

The method can comprise the step wherein a consumer defines also a desired temperature for the final prepared beverage in the mobile device.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a schematic drawing of a beverage heating, mixing and drinking device of the system according to the invention,
- Figure 2 is a block diagram showing a control system of a device such as described in Figure 1,
- Figures 3, 4 and 5 are schematic drawings illustrating processes for preparing a beverage with a beverage heating, mixing and drinking device of Figures 1 and 2.

### Detailed description of the drawings

### Beverage heating, mixing and drinking device

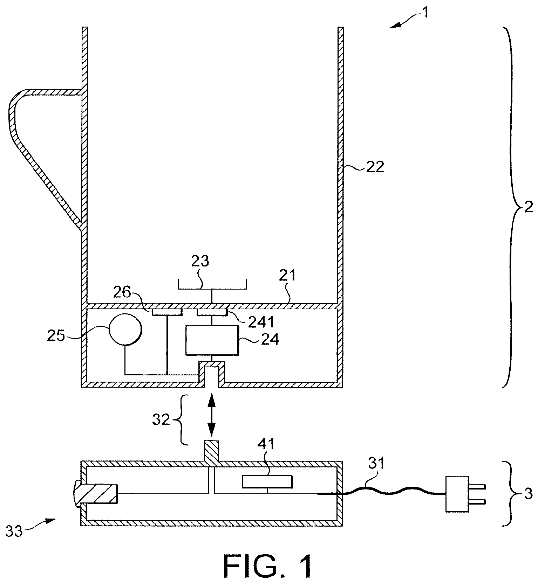

**Figure 1** illustrates a device 1 for heating, mixing and drinking a beverage. The device comprises a drinking container 2 and a docking station 3 for receiving the drinking container 2.

The drinking container comprises a container body presenting the function of holding the beverage and enabling the consumer to drink the beverage directly from the container. The body can present the shape of a glass, mug or cup. It usually presents a design enabling the consumer to hold it in one hand. The container can present a handle or a volume size enabling easy seizing for a consumer. The container body comprises a floor 21 and a sidewall 22 extending upwardly from the floor to form a space inside the sidewall and the floor wherein the beverage is mixed. Generally the sidewall 22 presents a global internal cross section.

A rotatable mixing device 23 is present at the bottom of the container body. The mixing device 23 is attached to the shaft of a rotating motor 24 extending through the bottom and floor of the container body.

The device 1 comprises a heating device 25 configured for heating a liquid hold in the container body. In the illustrated embodiment, the heating device is positioned under the floor of the container body, yet the heating device can also be positioned in a part of the sidewall 22 of the container body.

The device 1 comprises a temperature sensor 26 configured for measuring the temperature of a liquid contained in the container body. The temperature sensor can be positioned close to the floor of the container body.

The docking station 3 of the device is designed for receiving the bottom of the drinking container 2. The docking station 3 comprises a connection to power supply 31. The device 1 comprises a docking interface 32 between the docking station 3 and the drinking container 2 in order to supply power to the heating device 25, the temperature sensor 26 and the mixing device 24.

The docking interface 32 preferably comprises a first interface portion arranged on the device with a second interface portion arranged on the docking station. The first and second interface portions may be configured with at least one connection selected from a group consisting of: an interference (i.e. friction) fit, snap fit, resilient fastener fit.

The device 1 comprises a control system operable to execute a beverage preparation process by controlling the heating device 25 and the mixing device 26. The control system comprises a processor 41 positioned in the docking station 3 or alternatively in the bottom of the drinking container.

The device 1 comprises at least one button 33 to launch the beverage preparation. Preferably the button is positioned in the docking station 3.

The device 1 can comprise one button 33 for switching either the mixing and the heating devices or the mixing device only, depending on the number of pushes on the button. Or alternatively the device 1 can comprise two buttons : one for switching the mixing and the heating devices on together and one for switching the mixing device on only.

### Control system

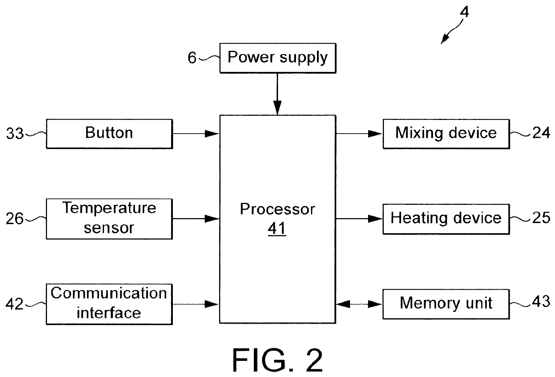

The control system 4, an example of which is illustrated in **Figure 2**, is operable to control the mixing and heating devices 24, 25 to execute a beverage preparation process. The control system 4 typically comprises : a processor 41, a temperature sensor 26, a communication interface 42, an optional button 33, a power supply 6, which are described sequentially.

The temperature sensor 26 is operatively connected to the processor 41 to provide an input for monitoring the beverage preparation process.

The power supply 6 is operable to supply electrical energy to the processor 4 and the heating and mixing devices. The power supply 6 may comprise various means, such as a battery or a unit to receive and condition a main electrical supply.

The processor 41 is generally operable :
- to receive an input, i.e. a command from the communication interface 42, the button 33 and/or from the temperature sensor 26,
- to process the input according to program code stored on a memory unit 43 (or as programed logic),
- to provide an output, which is generally the said preparation process. The process is executed with closed-loop control using the input signal from the temperature sensor 26 as feedback.
The processor 41 generally comprises memory, input and output system components, which are arranged as an integrated circuit, typically as a microprocessor or a microcontroller. The processor 41 may comprise other suitable integrated circuits, such as : an ASIC, a programmable logic device such as an FPGA, an analogue integrated circuit such as a controller. The processor 41 may also comprise one or more of the aforementioned integrated circuits, i.e. multiple processors. The processor 41 generally comprises a memory unit 43 for storage of the program code (such as preparation programs executable for a preparation process) and optionally data. The memory unit 43 typically comprises : a nonvolatile memory e.g. EPROM, EEPROM or Flash for program code and operating parameter storage, volatile memory (RAM) for data storage. The memory unit may comprise separate and/or integrated (e.g. on a die of the processor) memory. Typically the processor 41 comprises a clock for timing of the preparation process (and for execution of instructions). The communication interface 42 is for data communication between the preparation machine 4 and a mobile device. The communication interface 42 is used to receive information related to beverage preparation as will be discussed.

The communication interface 42 of the device is for interface with a corresponding interface of a mobile. The mobile interface is configured for wireless communication with the communication interface 42 of the device.
The communication interface 42 is configured to receive beverage preparation process information. The control system 4 is operable to :
- receive said information from a mobile device,
- enable using the information to set the preparation process of a beverage, in particular the temperature by control of the heating device 25, taking into account the temperature measured by the temperature sensor 26.
The communication interface 42 is for data transfer. The communication interface 42 is a wireless communication interface and is generally operable to transmit and receive wireless signals by a radio. It may be at least one selected from a group consisting of : a wireless local area network interface such as described in the Institute of Electronics Engineers (IEEE) 802.11 standard, Bluetooth™ from the Bluetooth Special Interest Group of Kirkland Wash, and optional further wireless interfaces such as a near field communication interface and an RFID interface.

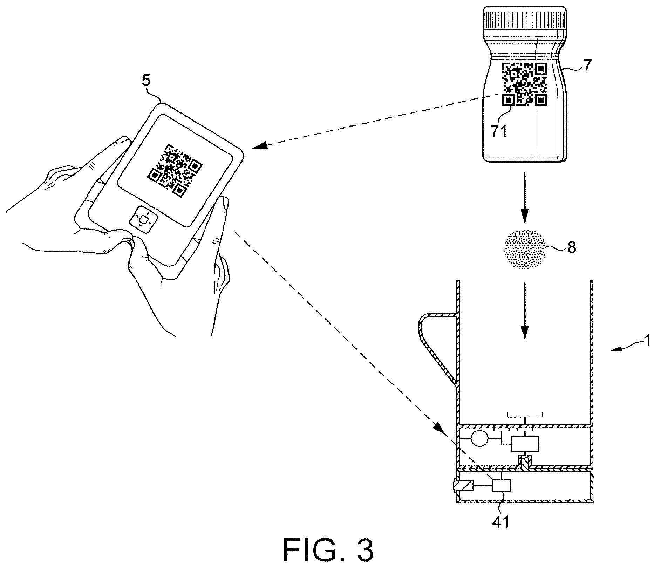

**Figure 3** illustrates a process of preparation of a beverage wherein the consumer introduces a beverage ingredient 8 inside the container body of the device 1. The beverage ingredient is dosed from a jar of ingredient powder, for example instant coffee, by means of e.g. a spoon. The jar presents a QR code 71 associated to at least the nature of the beverage ingredient stored in the jar. In a first step, the consumer is able to scan the QR code 71 with his/her mobile device 5 and, in a second step, to provide the control system 4 of the device with said information related at least the nature of the beverage ingredient introduced inside the device.
Accordingly the control system 4 is able to prepare a beverage by activation of the heating and mixing devices based on said information and the preparation program stored in the memory unit 43. The information can relate to the nature of the beverage ingredient only and the control unit can prepare the beverage based on process information related to this specific ingredient according to information stored in its memory unit.
The information can also be more sophisticated and can include information specific to the process of preparation of a beverage from the beverage ingredient stored in the jar with the particular device 1. Consequently, the information can comprise specific information about temperature and mixing. This can happen for new beverage ingredients that did not exist at the date of manufacturing of the device 1 and for which specific preparation conditions shall be implemented.
Alternatively, in a more simple manner, the beverage ingredient can be dosed from a jar of ingredient powder and the consumer can set in his/her mobile device 5 what the nature of the ingredient is to provide the control system 4 of the device with said information related at least the nature of the beverage ingredient introduced inside the device. For example, the mobile device can present an interface enabling the user to select the nature of the ingredient (coffee, milk, ...).

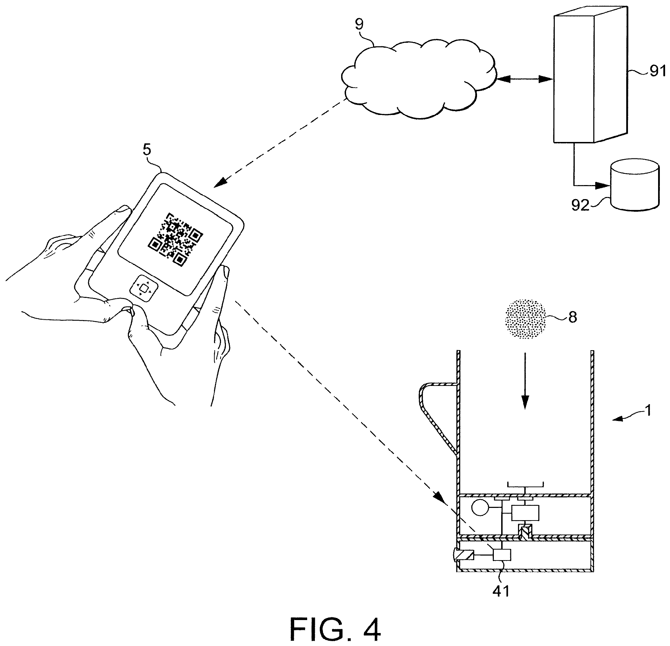

**Figure 4** illustrates another process of preparation of a beverage wherein the consumer introduces a beverage ingredient 8 inside the container body of the device 1. The consumer is able to communicate with an internet site 9 linked to the use of the device 1 by means of his/her mobile device 5. The internet site 9 linked to the use of the device 1 is also in communication with a server 91 and at least one database 92 that can store information about the process of preparation of a beverage with the device 1. In particular the database 92 can store information about beverage preparation recipes for preparing beverages from different beverage ingredients. The consumer is able to select the recipe corresponding to the beverage ingredient 8 he/she has manually introduced in the device 1, to download information about the beverage preparation from such a beverage ingredient on his/her mobile 5 and then to communicate said information to the communication interface 41 of the device so that the control system is able to prepare the beverage.
Accordingly, updated information about the process of preparation of a beverage from a particular ingredient can be downloaded to the processor 4, preferably to the memory unit 43, of the device 1.

Whatever the way to provide the device 1 with information about the beverage ingredient, the device is able to prepare the beverage according to heating parameters adapted to said beverage ingredient 8 that has been introduced in the device.
Generally black coffee is prepared at a temperature of about 75°C.

Generally milk and coffee mixes (3-in-1 components) are prepared at a temperature of at most 65°C.
The device of the present invention avoids milk or sugar burning on the device or preparation of a coffee at a too low temperature. Although the device is very simple, the preparations of various beverages remain optimal.

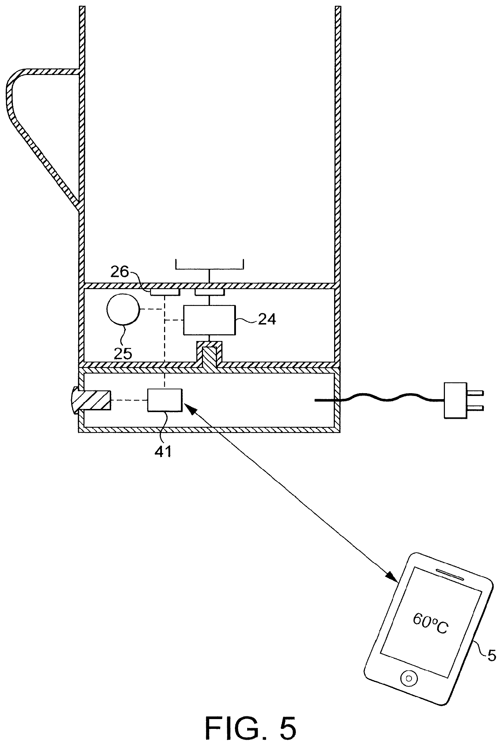

**Figure 5** illustrates another aspect of the process of preparation of a beverage that can be combined with the processes described in Figures 3 and 4. In this process of preparation, the consumer can be invited to provide information about the final temperature of the beverage he/she desires to prepare. Such information about the final temperature is taken into account by the control system during the beverage preparation in addition to other information related to the nature of the beverage ingredient.

The beverage dispenser of the present invention presents the advantage of enabling the preparation of a beverage with a simple heating, mixing and drinking device wherein the preparation takes into account the nature of the beverage ingredient introduced in the device.

Another advantage of the device of the present invention is that the heating, mixing and drinking device does not present any interface relative to the choice of the beverage ingredient introduced in the device and is not costly.

Although the invention has been described with reference to the above illustrated embodiments, it will be appreciated that the invention as claimed is not limited in any way by these illustrated embodiments.
Variations and modifications may be made without departing from the scope of the invention as defined in the claims. Furthermore, where known equivalents exist to specific features, such equivalents are incorporated as if specifically referred in this specification.
As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| heating, mixing and drinking device | 1 |
| drinking container | 2 |
| floor | 21 |
| side wall | 22 |
| mixing device | 23 |
| motor | 24 |
| heating device | 25 |
| temperature sensor | 26 |
| docking station | 3 |
| connection to power supply | 31 |
| docking interface | 32 |
| button | 33 |
| control system | 4 |
| processor | 41 |
| communication interface | 42 |
| memory unit | 43 |
| mobile device | 5 |
| power supply | 6 |
| jar | 7 |
| QR code | 71 |
| beverage ingredient | 8 |
| internet | 9 |
| server | 91 |
| database | 92 |

## Claims

1. A method of preparing a beverage with a beverage heating, mixing and drinking device (1), said device comprising :
. a drinking container body, comprising a floor (21) and a sidewall (22) extending upwardly from the floor to form a space inside the sidewall and the floor wherein the beverage is mixed,
. a mixing device (23) positioned within the container body,
. a motor (24) cooperating with the mixing device through the floor of the container body,
. a heating device (25) configured for heating a liquid hold in the container body,
. a temperature sensor (26) configured for measuring the temperature of a liquid contained in the container body,
. a control system (4) operable to execute a beverage preparation process comprising control of the heating device (25) and the mixing device (26), the control system comprising a communication interface (42) to receive beverage preparation process information from a mobile device (5),
said method comprising the steps of:
a)- manually introducing a beverage ingredient and optionally a diluent in the container body, either simultaneously or subsequently, then
b)- providing the control system (4) with information related to at least the nature of the beverage ingredient manually introduced in the drinking container body in step a), by means of a mobile device (5), and
c)- actuating the heating device (25) and the mixing device (23) either separately or simultaneously to prepare the beverage, the control system (4) controlling the heating device (25) and the mixing device (23) based on at least information related to the nature of the beverage ingredient and received from the mobile device in step b).

2. Method according to Claim 1, wherein the control system (4) receives information directly related to the nature of the beverage ingredient manually introduced in the drinking container body.

3. Method according to Claim 1, wherein the control system (4) receives information indirectly related to the nature of the beverage ingredient manually introduced in the drinking container body.

## Patentansprüche

1. Verfahren zum Zubereiten von Getränken mit einer Vorrichtung zum Erhitzen, Mischen und Trinken von Getränken (1), wobei die Vorrichtung umfasst:
. einen Trinkbehälterkörper, umfassend einen Boden (21) und eine Seitenwand (22), die sich vom Boden nach oben erstreckt, um einen Raum innerhalb der Seitenwand und des Bodens zu bilden, in dem das Getränk gemischt wird,
. eine Mischvorrichtung (23), die innerhalb des Behälterkörpers angeordnet ist,
. einen Motor (24), der mit der Mischvorrichtung durch den Boden des Behälterkörpers zusammenwirkt,
. eine Heizvorrichtung (25), die zum Erhitzen eines Flüssigkeitsraums in dem Behälterkörper konfiguriert ist,
. einen Temperatursensor (26), der zum Messen der Temperatur einer in dem Behälterkörper enthaltenen Flüssigkeit konfiguriert ist,
. ein Steuersystem (4), das betrieben werden kann, um einen Getränkezubereitungsprozess, umfassend eine Steuerung der Heizvorrichtung (25) und der Mischvorrichtung (26) auszuführen, wobei das Steuersystem eine Kommunikationsschnittstelle (42) zum Empfangen von Getränkezubereitungsprozessinformationen von einer mobilen Vorrichtung (5) umfasst,
wobei das Verfahren die Schritte umfasst:
a)- manuelles Einführen eines Getränkebestandteils und wahlweise eines Verdünnungsmittels in den Behälterkörper, entweder gleichzeitig oder nacheinander, dann
b)- Versorgen des Steuersystems (4) mit Informationen, die sich mindestens auf die Art des in Schritt a) manuell in den Trinkbehälterkörper eingeführten Getränkebestandteils beziehen, mittels einer mobilen Vorrichtung (5), und
c)- Betätigen der Heizvorrichtung (25) und der Mischvorrichtung (23) entweder separat oder gleichzeitig zum Zubereiten des Getränks, wobei das Steuersystem (4) die Heizvorrichtung (25) und die Mischvorrichtung (23) mindestens auf Basis von Informationen steuert, die sich auf die Art des Getränkebestandteils beziehen und von der mobilen Vorrichtung in Schritt b) empfangen werden.

2. Verfahren nach Anspruch 1, wobei das Steuersystem (4) Informationen empfängt, die sich direkt auf die Art des manuell in den Trinkbehälterkörper eingeführten Getränkebestandteils beziehen.

3. Verfahren nach Anspruch 1, wobei das Steuersystem (4) Informationen empfängt, die sich indirekt auf die Art des manuell in den Trinkbehälterkörper eingeführten Getränkebestandteils beziehen.

## Revendications

1. Procédé de préparation d'une boisson avec un dispositif de chauffage, de mélange et de consommation de boisson (1), ledit dispositif comprenant :
. un corps de récipient à boisson, comprenant un fond (21) et une paroi latérale (22) s'étendant vers le haut depuis le fond de façon à former un espace à l'intérieur de la paroi latérale et du fond, dans lequel la boisson est mélangée,
. un dispositif de mélange (23) positionné à l'intérieur du corps de récipient,
. un moteur (24) coopérant avec le dispositif de mélange à travers le fond du corps de récipient,
. un dispositif de chauffage (25) configuré pour chauffer un liquide se trouvant dans le corps de récipient,
. un capteur de température (26) configuré pour mesurer la température d'un liquide contenu dans le corps de récipient,
. un système de commande (4) pouvant fonctionner pour exécuter un processus de préparation de boisson comprenant la commande du dispositif de chauffage (25) et du dispositif de mélange (26), le système de commande comprenant une interface de communication (42) pour recevoir des informations de processus de préparation de boisson provenant d'un dispositif mobile (5),
ledit procédé comprenant les étapes consistant à :
a)- introduire manuellement un ingrédient de boisson et éventuellement un diluant dans le corps de récipient, simultanément ou ultérieurement, puis
b)- fournir au système de commande (4) des informations relatives à au moins la nature de l'ingrédient de boisson introduit manuellement dans le corps de récipient de consommation lors de l'étape a), au moyen d'un dispositif mobile (5), et
c)- actionner le dispositif de chauffage (25) et le dispositif de mélange (23) séparément ou simultanément pour préparer la boisson, le système de commande (4) commandant le dispositif de chauffage (25) et le dispositif de mélange (23) en fonction d'au moins des informations relatives à la nature de l'ingrédient de boisson et reçues du dispositif mobile lors de l'étape b).

2. Procédé selon la revendication 1, dans lequel le système de commande (4) reçoit des informations directement liées à la nature de l'ingrédient de boisson introduit manuellement dans le corps de récipient de consommation.

3. Procédé selon la revendication 1, dans lequel le système de commande (4) reçoit des informations indirectement liées à la nature de l'ingrédient de boisson introduit manuellement dans le corps de récipient de consommation.
